# EUROPEAN PATENT APPLICATION

(11) **EP 1 770 074 A2**
(43) Date of publication of application: **04.04.2007**
(21) Application number: 06020576.2
(22) Date of filing: 29.09.2006
(51) Int. Cl.: C04B 35/26, H01C 7/108, H01C 7/18, C04B 35/30, C04B 35/38

(54) **Nonmagnetic Zn-ferrite and composite multilayer type electronic part using the same**

(30) Priority: 29.09.2005 JP 2005283893; 29.09.2005 JP 2005283894
(71) Applicant: TDK Corporation, Chuo-ku, Tokyo 103-8272 (JP)
(72) Inventor: Umeda, Hidenobu, c/o TDK Corporation, Tokyo 103-8272 (JP); Takahashi, Yukio, c/o TDK Corporation, Tokyo 103-8272 (JP)
(74) Representative: HOFFMANN EITLE

(57) **Abstract**

In the nonmagnetic Zn-ferrite of the present invention comprising iron oxide and zinc oxide, the content of Fe²⁺ is specifically limited. Alternately in the nonmagnetic Zn-ferrite comprising iron oxide and zinc oxide as main components, a given amount of at least one metal oxide selected from the group consisting of manganese oxide, nickel oxide and magnesium oxide is contained. It is thus possible to provide a nonmagnetic Zn-ferrite that can have high resistivity without containing Cu.

## Description

### BACKGROUND ART OF THE INVENTION

### ART FIELD OF THE INVENTION

The present invention relates to a nonmagnetic Zn-ferrite used typically with ferrite-varistor composite parts or components, and a composite multilayer type electronic part or component fabricated using the same.

### EXPLANATION OF THE PRIOR ART

Computer equipment or the like incorporates ferrite chips, capacitor chips, varistors, etc. at the input/output ports of a circuit substrate or somewhere in circuitry so as to keep the equipment itself from producing noise, and hold back entrance of noise from the outside.

However, the addition of many parts such as multilayered varistors, inductors (ferrite chips) and capacitor chips to the circuit substrate has a problem in that they account for a large portion of substrate area, resulting in an enlargement of mount space. A part counts increase leads to added costs as well.

In attempts to solve such problems, there has been integral sintering of device chips in a mutually joined state, which results in a composite part assembly whereby compactness of parts, mount space reductions, etc. are achievable.

An inductor (ferrite chip) is often formed of a matrix material such as a nonmagnetic ferrite material, in which case there is an inductor structure obtained, having the so-called air core coil. Thus, an inductor forming the air core coil requires a lot more coil turns because the air core is nonmagnetic in nature, yet it has an advantage of showing good characteristics even in an ever higher frequency region.

Typical nonmagnetic ferrite is a Zr-ferrite consisting of Fe₂O₃ and ZnO, and CuO is generally added to it to enable it to be sintered at a much lower temperature (see, for instance, JP-A 1-158706).

Further, the prior art that would appear to be pertinent to the invention of this application is JP-A 2004-339016 that alleges that if an additive titanium oxide is added to a ferrite composition comprising Fe₂O₃, CuO and ZnO, it is then possible to keep CuO and ZnO from precipitation, thereby obtaining a nonmagnetic ferrite having stable high insulation resistance.

However, if a Cu-containing nonmagnetic Zn ferrite is used as a matrix material to form an inductor (ferrite chip) and that inductor is sintered together with a varistor, Cu contained in the inductor matrix material will diffuse and migrate into a varistor device side, resulting in an ailment such as deterioration of varistor characteristics.

When Cu is removed from the nonmagnetic Zn-ferrite, there is another ailment, viz., inability to obtain the practically necessary high resistivity, even with an additive titanium oxide added to it.

In view of such problems with the prior art as described above, the present invention has for its object the provision of a nonmagnetic Zn-ferrite that can have high resistivity without containing Cu.

### SUMMARY OF THE INVENTION

According to the present invention, that object is achievable by the provision of a nonmagnetic Zn-ferrite comprising iron oxide in an amount of 45 to 49.7 mol% as calculated on Fe₂O₃ basis with the balance being zinc oxide (as calculated on ZnO basis), wherein the content of Fe²⁺ is up to 1 wt%.

In a more preferable embodiment of the nonmagnetic Zn-ferrite of the present invention, the content of Fe²⁺ is from 0.1 to 0.6 wt%.

In a preferable embodiment of the nonmagnetic Zn-ferrite of the present invention, the content of P (phosphorus) is up to 100 ppm by weight.

In a more preferable embodiment of the nonmagnetic Zn-ferrite of the present invention, the content of P (phosphorus) is 5 to 50 ppm by weight.

The present invention also provides a composite multilayer type electronic part in which a varistor device portion having a varistor layer and an internal electrode is joined, either directly or through an intermediate joining layer, to an inductor device portion having a ferrite layer and an internal conductor, wherein:
said ferrite layer is a nonmagnetic Zn-ferrite comprising iron oxide in an amount of 45 to 49.7 mol% as calculated on Fe₂O₃ basis with the balance being zinc oxide (as calculated on ZnO basis), wherein the content of Fe²⁺ in said nonmagnetic Zn-ferrite is up to 1 wt%.

In a more preferable embodiment of the composite multilayer type electronic part of the present invention, the content of Fe²⁺ in the nonmagnetic Zn-ferrite is from 0.1 to 0.6 wt%.

In a preferable embodiment of the composite multilayer type electronic part of the present invention, the content of P (phosphorus) is up to 100 ppm by weight.

In a more preferable embodiment of the composite multilayer type electronic part of the present invention, the content of P (phosphorus) is 5 to 50 ppm by weight.

In a preferable embodiment of the composite multilayer type electronic part of the present invention, said varistor layer comprises ZnO as its main component.

In a preferable embodiment of the composite multilayer type electronic part of the present invention, said intermediate joining layer is formed by mixing a composition ingredient that forms said ferrite layer with zinc oxide (ZnO) that forms said varistor layer at a given proportion.

The present invention provides a nonmagnetic Zn-ferrite comprising iron oxide in an amount of 45 to 49.7 mol% as calculated on Fe₂O₃ basis and manganese oxide in an amount of 0.05 to 4.0 mol% as calculated on Mn₂O₃ basis, with the balance being zinc oxide (as calculated on ZnO basis).

The present invention provides a nonmagnetic Zn-ferrite comprising iron oxide in an amount of 45 to 49.7 mol% as calculated on Fe₂O₃ basis and nickel oxide in an amount of 0.7 to 7.0 mol% as calculated on NiO basis, with the balance being zinc oxide (as calculated on ZnO basis).

The present invention provides a nonmagnetic Zn-ferrite comprising iron oxide in an amount of 45 to 49.7 mol% as calculated on Fe₂O₃ basis and magnesium oxide in an amount of 0.7 to 7.0 mol% as calculated on MgO basis, with the balance being zinc oxide (as calculated on ZnO basis).

In the nonmagnetic Zn-ferrite of the present invention, a part of the content of said magnesium oxide is replaced by nickel oxide, and the total content of said nickel oxide (as calculated on NiO basis) and said magnesium oxide (as calculated on MgO basis) is 0.7 to 7.0 mol%.

In the nonmagnetic Zn-ferrite of the present invention, a part of the content of said iron oxide may be replaced by manganese oxide, in which case the content of said manganese oxide is 0.05 to 4.0 mol% as calculated on Mn₂O₃ basis.

The present invention provides a composite multilayer type electronic part in which a varistor device portion having a varistor layer and an internal electrode is joined, either directly or through an intermediate joining layer, to an inductor device portion having a ferrite layer and an internal conductor, wherein:
said ferrite layer is formed of any one selected from said nonmagnetic Zn-ferrites.

### BRIEF DESCRIPTION OF THE DRAWINGS

Fig. 1 is illustrative in perspective of a composite multilayer type electronic part, and
Fig. 2 is an exploded perspective view for providing an easy-to-understand illustration of the multilayer structure of a composite multilayer type electronic part.

### DETAILED EXPLANATION OF THE INVENTION

In what follows, the best mode for carrying out the present invention will be explained in great details.

### (1) Detailed Explanation of the Invention of the

### First Group of This application

The nonmagnetic Zn-ferrite according to the invention of the first group comprises iron oxide and zinc oxide with a given blend composition, and with a Fe²⁺ content of up to 1 wt%. The nonmagnetic Zn-ferrite of the invention according to the first group does not contain copper oxide that is a factor leading to a deterioration of characteristics upon joining to a varistor device.

Some specific embodiments will be explained.

The nonmagnetic Zn-ferrite of the present invention contains iron oxide in an amount of 45 to 49.7 mol% (more preferably 46.5 to 49.5 mol%) as calculated on Fe₂O₃ basis, with the rest being zinc oxide (as calculated on ZnO basis). And then, the content of Fe²⁺ in the nonmagnetic Zn-ferrite should be up to 1 wt%, especially 0.1 to 0.6 wt%.

As the amount of iron oxide becomes less than 45 mol% as calculated on Fe₂O₃ basis, it tends to cause inconvenience that sintering is hard to proceed with a resistivity drop. As the amount of iron oxide exceeds 49.7 mol% as calculated on Fe₂O₃ basis, on the other hand, it tends to cause inconvenience that the increase in the content of Fe²⁺ causes resistivity to grow low.

As the content of Fe²⁺ in the nonmagnetic Zn-ferrite exceeds 1 wt%, it tends to cause inconvenience that resistivity grows low.

Control of the content of Fe²⁺, for instance, may be achieved by taking full care of selection of the so-called media materials used for blending and pulverization (for instance, ZrO₂ media material is used in place of steal media material), or alterations of material compositions or making powders before firing much finer so as to obtain sufficient sintering densities even at low firing temperatures. Among others, the simplest and most effective technique is to make an appropriate selection from media materials used for blending or pulverization in production processes. The content of Fe²⁺ may be measured by what is called the titration method.

Preferably in the present invention, the content of phosphorus (P) in the nonmagnetic Zn-ferrite is up to 100 ppm by weight, especially 5 to 50 ppm by weight. As the content of P in the nonmagnetic Zn-ferrite exceeds 100 ppm by weight, it tends to cause inconvenience that sintering densities grow low. Phosphorous (P) in the nonmagnetic Zn-ferrite may be measured by way of techniques such as fluorescent X-rays or ICP.

Roughly, the nonmagnetic ferrite of the present invention may be produced pursuant to known production processes. To control the content of Fe²⁺ to within the given range of the present invention, however, it is preferable to use an iron component-free material as the media material used for blending and pulverization. For instance, preference is given to ZrO₂ media material. For more specific production processes, see the examples given later.

Reference is then made to a composite multilayer type electronic part in which an inductor device portion having a ferrite layer formed of a nonmagnetic Zn-ferrite such as the one mentioned above and an internal conductor is joined to a varistor device portion having a varistor layer and an internal electrode.

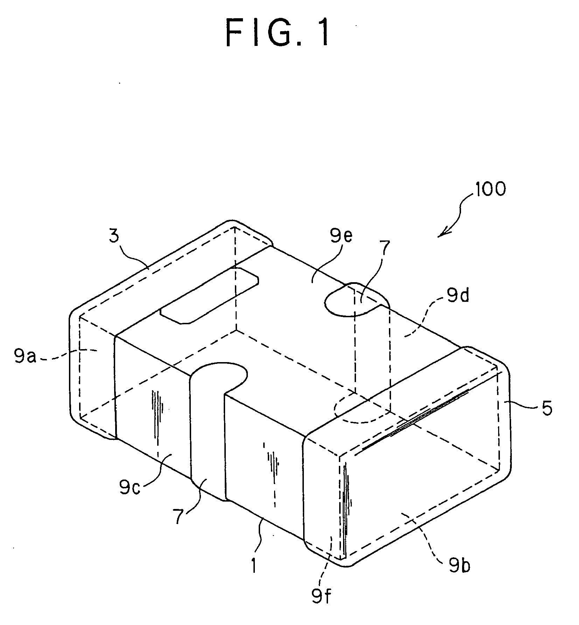

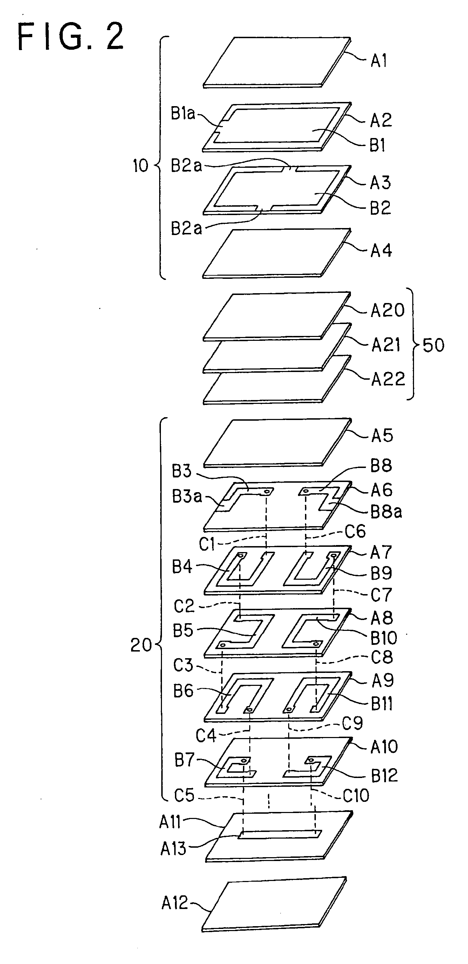

Figs. 1 and 2 are each illustrative of the general arrangement of one exemplary composite multilayer type electronic part. Note here that Figs. 1 and 2 provide a schematic illustration of how the varistor device portion is joined to the inductor device portion by way of example only; for instance, that arrangement may be modified such that capacitor chips or the like are additionally stacked thereon.

Fig. 1 is illustrative in perspective of the composite multilayer electronic part. Fig. 2 provides an easy-to-understand exploded illustration of the multilayer structure of the composite multilayer type electronic part.

As shown in Fig. 1, a composite multilayer type electronic part indicated generally at 100 comprises a multilayer assembly 1 of substantially cuboidal shape that forms a body of the multilayer type electronic part 100. The multilayer assembly 1 comprises a pair of opposing side faces 9a and 9b, a pair of side faces 9c and 9d, and a pair of upper face 9e and bottom face 9f, all into a substantially cuboidal shape. Note here that when the composite multilayer type electronic part 100 is mounted on an external substrate, it is the bottom face 9f that faces that external substrate.

Further, the composite multilayer electronic part 100 comprises an input terminal (first terminal electrode) 3 formed on the side face 9a of the multilayer assembly 1, an output terminal (second terminal electrode) 5 formed on the side face 9b, and a pair of ground terminals (third terminal electrode) 7 formed on the side faces 9c and 9d. The input terminal 3 extends all over the side face 9a with its part resting on the side faces 9c to 9f. The output terminal 5 extends all over the side face 9b with its part resting on the side faces 9c to 9f. Each ground terminal 7 extends in the form of a belt in the stacking direction of the multilayer assembly 1 with both its ends resting on the upper face 9e and the bottom face 9f.

As shown in Fig. 2, the composite multilayer type electronic part 100 comprises a varistor device portion 10 and an inductor device portion 20 as a component part of the multilayer assembly 1.

### Explanation of the Varistor Device Portion 10

First, the arrangement of the varistor device portion 10 is explained. The varistor device portion 10 is formed by stacking together multiple (four in the embodiment here) varistor green sheets A1, A2, A3 and A4 including varistor green sheets A2 and A3, each equipped with a hot electrode B1 that is the so-called internal electrode, a ground electrode B2 and their lead ports B1a and B2a. The hot electrode B1 is a varistor electrode for signals, and the ground electrode B2 is a varistor electrode for grounding.

In the practical composite multilayer type electronic part 100, the boundaries between the varistor green sheets A1 to A4 are integrated together invisibly. The varistor green sheets A1 to A4 function as a varistor layer by being fired.

The varistor green sheets A1 to A4 are each formed by coating on film a slurry using as a starting material a powder mixture of, for instance, ZnO, Co₃O₄, Pr₆O₁₁, CaCO₃ and SiO₂ by means of a doctor blade technique. The composition of such varistor green sheets A1 to A4 will make sure the development of voltage nonlinearity with a resistance value changing nonlinearly with respect to an applied voltage. The varistor green sheets A1 to A4 have each a thickness of, for instance, about 30 µm. The composition of the varistor green sheets A1 to A4 will be explained in great details.

Here, relations of the varistor green sheets to the electrodes are explained in great details. The varistor green sheet A2 is provided on its surface with the hot electrode B1 and the lead port B1a, and the hot electrode B1 is in a substantially rectangular shape a size smaller than the varistor green sheet A2. The hot electrode B1 is integrally provided with the lead port B1a at the center of one short side. The lead port B1a of the hot electrode B1 is in a substantially rectangular shape, and brought down to the edge of the varistor green sheet A2 while its end is exposed on the end face of the varistor green sheet A2, so that the lead port B1a of the hot electrode B1 is electrically connected to the input terminal 3.

The varistor green sheet A3 is provided on its surface with the ground electrode B2 and the lead port B2a. The ground electrode B1 is in a substantially rectangular shape a size smaller than the varistor green sheet A3. The ground electrode B2 is integrally provided with a pair of lead ports B2a at the centers of both its short sides. Each lead port B2a of the ground electrode B2 is in a substantially rectangular shape, and brought down to the edge of the varistor green sheet A3 while its end is exposed on the end face of the varistor green sheet A3, so that the lead port B2a of the ground electrode B2 is connected to each ground terminal 7.

As described above, the varistor green sheets A1 to A4 are stacked together with the varistor green sheet A2 held between the hot electrode B1 and the ground electrode B2, whereby a varistor V is formed. Note here that the hot electrode B1, the ground electrode B2 and each lead port B1a, B2a, for instance, are formed by screen printing a paste composed mainly of Pd on the varistor green sheet A1, A3, and have each a thickness of, for instance, about 5 µm.

### Explanation of the Inductor Device Portion 20

One exemplary arrangement of the inductor device portion 20 is now explained. The inductor device portion 20 is formed by stacking together multiple (seven in the embodiment here) inductor green sheets (ferrite layer) A5 to A12 including inductor green sheets A6 to A11 comprising a ferrite layer, an inductor device portion having an internal conductor and a conductor pattern B3 to B13 that is an internal conductor. In the practical composite multilayer type electronic part 100, the boundaries between the inductor green sheets A5 to A12 are integrated together invisibly. The inductor green sheets A5 to A12 function as an insulating layer by being fired.

The inductor green sheets A5 to A12 are each an insulator of electrical insulation.

The inductor green sheets A5 to A12 in the present invention are each formed by coating on film a slurry using as a starting material a nonmagnetic Zn-ferrite such as the one mentioned above by means of a doctor blade technique. The inductor green sheets A5 to A12 have each a thickness of, for instance, about 20 µm.

On the surface of the inductor green sheet A6, there are conductor patterns B3 and B8 juxtaposed at a given spacing in its longitudinal direction. The conductor patterns B3 and B8 are electrically insulated from each other. Each of the conductor patterns B3 and B8 is equivalent to an about 1/2 turn of coil formation, and configured in a substantially L shape. At one end of each of the conductor patterns B3 and B8, there is a lead port B3a, B8a integrally provided. The lead ports B3a and B8a of the conductor patterns B3 and B8 are brought down to the edge of the inductor green sheet A6, with their ends exposed on the end face of the inductor green sheet A6, so that the lead port 3a is electrically connected to the input terminal 3 and the lead port B8a is electrically connected to the output terminal 5.

The other ends of the conductor patterns B3 and B8 are electrically connected to through-hole electrodes C1 and C6 extending through the inductor green sheet A6 in its thickness direction so that upon completion of the multilayer assembly 1, the conductor patterns B3 and B8 are electrically connected to one ends of associated conductor patterns B4 and B9 by way of the through-hole electrodes C1 and C6.

On the surface of the inductor green sheet A7, there are the conductor patterns B4 and B9 juxtaposed at a given spacing in its longitudinal direction. The conductor patterns B4 and B9 are electrically insulated from each other. Each of the conductor patterns B4 and B9 is equivalent to an about 3/4 turn of coil formation, and configured in a substantially U shape.

In one ends of the conductor patterns B4 and B9, there are areas included which, upon completion of the multilayer assembly 1, make electrical connections to the through-hole electrodes C1 and C6. The other ends of the conductor patterns B4 and B9 are electrically connected to through-hole electrodes C2 and C7 extending through the inductor green sheet A7 in its thickness direction so that upon completion of the multilayer assembly 1, the conductor patterns B4 and B9 are electrically connected to one ends of associated conductor patterns B5 and B10 by way of the through-hole electrodes C2 and C7.

On the surface of the inductor green sheet A8, there are the conductor patterns B5 and B10 juxtaposed at a given spacing in its longitudinal direction. The conductor patterns B5 and B10 are electrically insulated from each other. Each of the conductor patterns B5 and B10 is equivalent to an about 3/4 turn of coil formation, and configured in a substantially C shape. In one ends of the conductor patterns B5 and B10, there are areas included which, upon completion of the multilayer assembly 1, make electrical connections to the through-hole electrodes C2 and C7. The other ends of the conductor patterns B5 and B10 are electrically connected to through-hole electrodes C3 and C8 extending through the inductor green sheet A8 in its thickness direction so that upon completion of the multilayer assembly 1, the conductor patterns B5 and B10 are electrically connected to one ends of the associated conductor patterns B6 and B11 by way of the through-hole electrodes C3 and C8.

On the surface of the inductor green sheet A9, there are the conductor patterns B6 and B11 juxtaposed at a given spacing in its longitudinal direction. The conductor patterns B6 and B11 are electrically insulated from each other. Each of the conductor patterns B6 and B11 is equivalent to an about 3/4 turn of coil formation, and configured in a substantially U shape. In one ends of the conductor patterns B6 and B11, there are areas included which, upon completion of the multilayer assembly 1, make electrical connections to the through-hole electrodes C3 and C8. The other ends of the conductor patterns B6 and B11 are electrically connected to through-hole electrodes C3 and C9 extending through the inductor green sheet A9 in its thickness direction so that upon completion of the multilayer assembly 1, the conductor patterns B6 and B11 are electrically connected to one ends of the associated conductor patterns B7 and B12 by way of the through-hole electrodes C4 and C9.

On the surface of the inductor green sheet A10, there are the conductor patterns B7 and B12 juxtaposed at a given spacing in its longitudinal direction. The conductor patterns B7 and B12 are electrically insulated from each other. Each of the conductor patterns B7 and B12 is equivalent to an about 1/2 turn of coil formation, and configured in a substantially C shape. In one ends of the conductor patterns B7 and B12, there are areas included which, upon completion of the multilayer assembly 1, make electrical connections to the through-hole electrodes C4 and C9. The other ends of the conductor patterns B7 and B12 are electrically connected to through-hole electrodes C5 and C10 extending through the inductor green sheet A10 in its thickness direction so that upon completion of the multilayer assembly 1, the conductor patterns B7 and B12 are electrically connected to each end of the associated conductor pattern B13 by way of the through-hole electrodes C5 and C10.

As explained above, if the inductor green sheets A5 to A11 are stacked together and the conductor patterns B3 to B7 are electrically connected to one another by way of the through-hole electrodes C1 to C4, then there is one coil formed. If the conductor patterns B8 to B12 are electrically connected to one another by way of the through-hole electrodes C6 to C9, then there is another coil formed.

On the surface of the inductor green sheet A11, there is the conductor pattern B13 extending in a substantially I shape in its longitudinal direction. In positions corresponding to both ends of the conductor pattern B13, there are areas included which, upon completion of the multilayer assembly 1, make electrical connections to the through-hole electrodes C5 and C10, whereby two coils are electrically connected in series.

Note here that the conductor patterns B3 to B13 and the through-hole electrodes C1 to C11, for instance, are each formed by screen printing a paste composed mainly Pd on the inductor green sheet A6 to A11. The conductor patterns B3 to B13 should each have a thickness of, for instance, about 14 µm.

### Explanation of the Intermediate Joining Layer

The varistor device portion 10 is joined, either directly or through the intermediate joining layer, to the inductor device portion 20. It is preferable to use an intermediate joining layer 50 (A20 to A22) for joining both device portions together, as shown in Fig. 2.

Preferably, the intermediate joining layer 50 is formed by mixing the composition component that forms the ferrite layer of the inductor device portion 20 with zinc oxide (ZnO) that forms the varistor layer of the varistor device portion 10 at a given ratio. This is to make sure the joining and integration of the inductor device portion 20 with the varistor device portion 10 with no cracking.

The total thickness of the intermediate joining layer 50, for instance, is up to 400 µm, preferably up to 240 µm, and more preferably up to 180 µm. The inductor device portion that is one portion to be joined is formed of a nonmagnetic ferrite matrix material that forms the so-called air core coil. The air core coil-formation inductor has one advantage of showing good performance even in an ever higher frequency range but, instead, offers a space problem that the coil must have a lot more turns because of its non-magnetism. This tends to cause the inductor itself to grow larger than one formed of an ordinary magnetic ferrite matrix material. To this end, it is important that the intermediate layer provided for joining be as thin as possible thereby making a sintered composite integral piece more compact.

As described above, it is desired that each joining film A20, A21, and A22 of the intermediate joining layer 50 be formed by mixing the composition component that forms the ferrite layer of the inductor device portion with zinc oxide (ZnO) (that may be the composition component that forms the varistor layer of the varistor device portion) at a given ratio. Preferably in that case, a joining film located at a position nearer to the ferrite layer should contain a lot more ferrite layer component composition and, on the contrary, a joining film located at a position nearer to the varisotor layer contains a lot more zinc oxide (ZnO) that may be the composition component that forms the varistor layer of the varistor device portion.

It is also desired that K, Na or Li be added to each joining film of the intermediate joining layer 50 so as to compensate for a portion of resistance that becomes low by the mixing of the varistor layer composition component with the ferrite layer composition component.

### Explanation of the Composition of the Ferrite Layer in the Inductor Device Portion

The ferrite layer of the inductor device portion according to the present invention is formed of the aforesaid nonmagnetic Zn-ferrite.

It is then acceptable for that ferrite layer to contain as additives SiO₂, CaCO₃, ZrO₂, SnO₂, TiO₂, MoO₃, Bi₂O₃, WO₃, CoO, etc. (in amounts of, for instance, about 1 wt%) without departing from the requirements for the present invention.

### Explanation of the Composition of the Varistor Layer in the Varistor Device Portion

The varistor layer contains as its main component at least 95 mol%, especially 95 to 98 mol% of ZnO and as subordinate components Co, Pr, etc.

How to fabricate the composite multilayer type electronic part 100 shown in Figs. 1 and 2 is now explained. First, the varistor green sheets A1 to A4, the inductor green sheets A5 to A12 and the joining film green sheets A20 to A22 for the intermediate joining layer are at the ready.

Then, laser processing is applied to the given positions of the inductor green sheets A6 to A11 that are to be provided with the through-hole electrodes C1 to C10 to form through-holes.

Then, the hot electrode B1, the ground electrode B2 and the lead ports B1a and B2a are formed on the varistor green sheet A2, and A3. Likewise, the conductor patterns B3 to B13 and the lead ports B3a and B8a are formed on the inductor green sheets A6 to A11. Further, the through-hole electrodes C1 to C10 are provided.

Then, the varistor green sheets A1 to A4, the inductor green sheets A5 to A12 and the joining film green sheets A20 to A22 for the intermediate joining layer are stacked and compressed together in order shown in Fig. 2, then cut in chip unit, and finally fired at a given temperature (of, for instance, 1,100 to 1,200°C).

This will yield the multilayer assembly 1 in which the boundaries between the green sheets are integrated together invisibly.

Then, the multilayer assembly 1 is provided with the input terminal 3, the output terminal 5 and the ground terminal 7. This will yield a multilayer type electronic part E1. The input terminal 3, the output terminal 5 and the ground terminal 7 are formed by transferring an electrode paste composed mainly of silver on the side faces 9a to 9d of the multilayer assembly 1, followed by baking at a given temperature (of, for instance, 600 to 700°C), and electroplating. For that electroplating, Ni and Sn; Cu, Ni and Sn; Ni and Au; Ni, Pd and Au; Ni, Pb and Ag; Ni and Ag; or the like may be used.

### EXAMPLE

The present invention is now explained more specifically with reference to specific examples of the invention of the first group.

### Experimental Example I-1

### Preparation of the Nonmagnetic Zn-Ferrite

The given amounts of the raw materials were blended such that Fe₂O₃ and ZnO forming part of the nonmagnetic Zn-ferrite composition after firing were contained as set out in Table 1.

The thus obtained blend was mixed with the addition of purified water to it in a ball mill for 24 hours to form a slurry.

That slurry was dried, and thereafter calcined at the temperature of 900°C for 2 hours.

Then, purified water was added to the calcined product for fine pulverization.

The obtained fine powders were dried, and thereafter dispersed along with an organic binder into a solvent to form a slurry.

Thereafter, a 20 µm thick ferrite sheet was made from that slurry by means of a doctor blade technique, and fired at 1,150°C for 1 hour into a sintered sample.

Two types of media materials used for blending and pulverization, say, ZrO₂ media material and steel media material, were at the ready to control the content of Fe²⁺ to within the inventive given range in the sample preparation process. And in the sample preparation process, two such media materials were selectively used. In this connection, for all inventive samples, blending and pulverization were carried out with the ZrO₂ media material.

Each sample was measured for (1) sintering density, (2) resistivity, and (3) non-magnetism in the following ways. Note here that the content of Fe²⁺ in Table 1 was measured by what is called the titration method, as previously mentioned.

### (1) Sintering Density

The sintering density of a sample was found by measuring the weight of the sample and the weight of the sample in water and performing calculation on the basis of the Archimedean principle.

### (2) Resistivity (Ω·m)

An indium-gallium electrode was coated on both end faces of a sample. The resistivity ρ in Ωm of the sample was found from a dc resistance measurement and sample size. Measurement was done with SUPER MEGOHMMETER MODEL SM-5E made by TOA Electronics Co., Ltd.

### (3) Non-Magnetism

If a sample had a permeability of 1 at -50°C, the sample was judged to have no magnetism, and if a sample had a permeability of greater than 1, the sample was judged to have magnetism. In Table 1, ○ stands for a sample found to have no magnetism, and × is indicative of a sample having magnetism. The results are set out in Table 1, given just below.

**Table 1**

| Sample No. | Fe₂O₃ (mol%) | ZnO (mol%) | Fe²⁺ (wt%) | P (wtppm) | SD | Resistivity (Ω · m) | Non-Magnetism |
|---|---|---|---|---|---|---|---|
| I-1 | 46.0 | 54.0 | 0.51 | 12 | 5.1 | 1.3×10⁶ | ○ |
| I-2 | 48.0 | 52.0 | 0.39 | 11 | 5.1 | 1.5×10⁶ | ○ |
| I-3 | 49.0 | 51.0 | 0.17 | 13 | 5.1 | 7.5×10⁵ | ○ |
| I-4 | 49.7 | 50.3 | 0.20 | 15 | 5.1 | 5.2×10⁵ | ○ |
| I-5* | 49.9 | 51.1 | 0.60 | 13 | 4.9 | 8.3×10³ | ○ |
| I-6* | 43.0 | 57.0 | 0.45 | 14 | 4.9 | 7.2×10³ | ○ |
| I-7* | 49.0 | 51.0 | 1.57 | 13 | 5.1 | 1.1×10⁴ | ○ |
| I-8* | 49.0 | 51.0 | 0.17 | 117 | 4.9 | 8.5×10⁴ | ○ |

| | | | | | | | |
|---|---|---|---|---|---|---|---|
| SD: Sintering Density in × 10³ kg/m³ * Comparative Example | | | | | | | |

The effectiveness of the present invention could be seen from the results of Table 1.

That is, the nonmagnetic Zn-ferrite of the present invention comprises iron oxide in an amount of 45 to 49.7 mol% as calculated on Fe₂O₃ basis with the rest being zinc oxide (as calculated on ZnO basis) and has a content of Fe²⁺ reduced down to up to 1 wt%, so it can have a high resistivity of 10⁵ Ω · m or greater without containing Cu.

### (2) Detailed Explanation of the Invention of the Second Group of This application

The nonmagnetic Zn-ferrite according to the invention of the second group comprises a nonmagnetic Zn-ferrite component containing as main ingredients iron oxide and zinc oxide, and further contains at least one metal oxide selected from the group consisting of manganese oxide, nickel oxide and magnesium oxide. And then, the nonmagnetic Zn-ferrite of the invention according to the second group does not contain copper oxide that is a factor leading to a deterioration of characteristics upon joining to a varistor device.

Some specific embodiments of the invention according to the second group will be explained.

### (i) Fe-Zn-Mn Type Nonmagnetic Ferrite

The first embodiment of the invention according to the second group is directed to a nonmagnetic Zn-ferrite comprising iron oxide in an amount of 45 to 49.7 mol% (more preferably, 46.0 to 49.5 mol%) as calculated on Fe₂O₃ basis and manganese oxide in an amount of 0.05 to 4.0 mol% (more preferably, 0.2 to 1.5 mol%) as calculated on Mn₂O₃ basis, with the balance being zinc oxide (as calculated on ZnO basis).

As the amount of iron oxide becomes less than 45 mol% as calculated on Fe₂O₃ basis, it tends to cause inconvenience that sintering is hard to proceed with a resistivity drop. As the amount of iron oxide exceeds 49.7 mol% as calculated on Fe₂O₃ basis, on the other hand, it tends to cause inconvenience that the increase in the content of Fe²⁺ causes resistivity to grow low.

As the amount of manganese oxide becomes less than 0.05 mol% as calculated on Mn₂O₃ basis, it tends to cause inconvenience that there are no sufficient effects obtained on improvements in resistivity. As the amount of manganese oxide exceeds 4.0 mol% as calculated on Mn₂O₃ basis, on the other hand, it tends to cause inconvenience that resistivity grows low.

### (ii) Fe-Zn-Ni Type Nonmagnetic Ferrite

The second embodiment of the invention according to the second group is directed to a nonmagnetic Zn-ferrite comprising iron oxide in an amount of 45 to 49.7 mol% (more preferably, 46.0 to 49.5 mol%) as calculated on Fe₂O₃ basis and nickel oxide in an amount of 0.7 to 7.0 mol% (more preferably, 1.0 to 5.0 mol%) as calculated on NiO basis, with the balance being zinc oxide (as calculated on ZnO basis).

As the amount of iron oxide becomes less than 45 mol% as calculated on Fe₂O₃ basis, it tends to cause inconvenience that resistivity grows low, as mentioned above. As the amount of iron oxide exceeds 49.7 mol% as calculated on Fe₂O₃ basis, on the other hand, it tends to cause inconvenience that resistivity grows low, as mentioned above.

As the amount of nickel oxide becomes less than 0.7 mol% as calculated on NiO basis, it tends to cause inconvenience that there are no sufficient effects obtained on improvements in resistivity. As the amount of nickel oxide exceeds 7.0 mol% as calculated on NiO basis, on the other hand, it tends to cause inconvenience that there is difficulty in retaining non-magnetism.

### (iii) Fe-Zn-Mg Type Nonmagnetic Ferrite

The third embodiment of the invention according to the second group is directed to a nonmagnetic Zn-ferrite comprising iron oxide in an amount of 45 to 49.7 mol% (more preferably, 46.0 to 49.5 mol%) as calculated on Fe₂O₃ basis and magnesium oxide in an amount of 0.7 to 7.0 mol% (more preferably, 1.0 to 5.0 mol%) as calculated on MgO basis, with the balance being zinc oxide (as calculated on ZnO basis).

As the amount of iron oxide becomes less than 45 mol% as calculated on Fe₂O₃ basis, it tends to cause inconvenience that resistivity grows low, as mentioned above. As the amount of iron oxide exceeds 49.7 mol% as calculated on Fe₂O₃ basis, on the other hand, it tends to cause inconvenience that resistivity grows low, as mentioned above.

As the amount of magnesium oxide becomes less than 0.7 mol% as calculated on MgO basis, it tends to cause inconvenience that there are no sufficient effects obtained on improvements in resistivity. As the amount of magnesium oxide exceeds 7.0 mol% as calculated on MgO basis, on the other hand, it tends to cause inconvenience that there is difficulty in retaining non-magnetism.

### (iv) Fe-Zn-(Mg, Ni) type Nonmagnetic Ferrite

For instance, a part of the content of magnesium oxide in the Fe-Zn-Mg type nonmagnetic ferrite according to the above embodiment (iii) is replaced by nickel oxide, and the total content of nickel oxide (as calculated on NiO basis) and magnesium oxide (as calculated on MgO basis) is limited to 0.7 to 7.0 mol%. According to experimentation by the inventors, the magnesium oxide and nickel oxide contained would act in such a way as to modify the structure of a ferrite grain boundary. Therefore, the content of these elements should be limited to the range of 0.7 to 7.0 mol%.

### (v) Fe-Zn-(Mg, Ni, Mn) Type Nonmagnetic Ferrite

For instance, a part of the content of iron oxide in the Fe-Zn-Ni type nonmagnetic ferrite that is the aforesaid embodiment (ii), the Fe-Zn-Mg type nonmagnetic ferrite that is the aforesaid embodiment (iii), and the Fe-Zn-(Mg, Ni) type nonmagnetic ferrite that is the aforesaid embodiment (iv) may be replaced by manganese oxide, in which case the content of manganese oxide should be in the range of 0.05 to 4.0 mol% as calculated on Mn₂O₃ basis, as is the case with the aforesaid embodiment (i).

The content of nickel oxide (as calculated on NiO basis), the content of magnesium oxide (as calculated on MgO basis) or the total content of nickel oxide (as calculated on NiO basis) and magnesium oxide (as calculated on MgO basis) should be in the range of 0.7 to 7.0 mol%.

Manganese oxide would act to hold back the formation of divalent iron in the ferrite, differing in behavior from magnesium oxide or nickel oxide that would appear to act in such a way as to modify the ferrite grain boundary. For this reason, the content range of manganese oxide, and the content range of magnesium oxide or nickel oxide is separately set.

Of the aforesaid nonmagnetic ferrite embodiments (i) to (v), the most preference is given to the Fe-Zn-Mn type nonmagnetic ferrite embodiment (i).

The nonmagnetic ferrites of the invention according to the second group may be produced by known processes, and for a specific production process, see the examples given later.

An inductor device portion having a ferrite layer comprising the nonmagnetic Zn-ferrite of the invention according to the second group and an internal conductor is joined to a varistor device portion having a varistor layer and an internal electrode into a composite multilayer electronic part.

That composite multilayer type electronic part is much the same as that according to the invention of the first group except for the selection of the nonmagnetic Zn-ferrite composition; a detailed explanation of the composite multilayer type electronic part according to the invention of the second group is omitted to avoid overlaps. That is, the explanation of Figs. 1 and 2 and the varistor device portion 10 (including the explanation of the composition), the explanation of the inductor device portion 20 and the explanation of the intermediate joining layer are common to the invention according to the first group and the invention according to the second group.

The ferrite layer of the inductor device portion of the invention according to the second group is formed of the aforesaid nonmagnetic Zn-ferrite, and may further contain as additives SiO₂, CaCO₃, ZrO₂, SnO₂, TiO₂, MoO₃, Bi₂O₃, WO₃, CoO or the like in an amount of about 1 wt%.

### EXAMPLE

The present invention is now explained more specifically with reference to specific examples of the invention of the second group.

### Experimental Example II-1

### Preparation of the Nonmagnetic Zn-Ferrite

The given amounts of the raw materials were blended such that Fe₂O₃, ZnO, Mn₂O₃, NiO and MgO forming part of the nonmagnetic Zn-ferrite composition after firing were contained as set out in Table 2.

The thus obtained blend was mixed with the addition of purified water to it in a ball mill for 24 hours to form a slurry.

That slurry was dried, and thereafter calcined at the temperature of 900°C for 2 hours.

Then, purified water was added to the calcined product for fine pulverization.

The obtained fine powders were dried, and thereafter dispersed along with an organic binder into a solvent to form a slurry.

Thereafter, a 20 µm thick ferrite sheet was made from that slurry by means of a doctor blade technique, and fired at 1,150°C for 1 hour into a sintered sample.

Each sample was measured for (1) sintering density, (2) resistivity, and (3) non-magnetism in the following ways.

### (1) Sintering Density

The sintering density of a sample was found by measuring the weight of the sample and the weight of the sample in water and performing calculation on the basis of the Archimedean principle.

### (2) Resistivity (Ω · m)

An indium-gallium electrode was coated on both end faces of a sample. The resistivity ρ in Ωm of the sample was found from a dc resistance measurement and sample size. Measurement was done with SUPER MEGOHMMETER MODEL SM-5E made by TOA Electronics Co., Ltd.

### (3) Non-Magnetism

If a sample had a permeability of 1 at -50°C, the sample was judged to have no magnetism, and if a sample had a permeability of greater than 1, the sample was judged to have magnetism. In Table 2, ○ stands for a sample found to have no magnetism, and × is indicative of a sample having magnetism. The results are set out in Table 2, given just below.

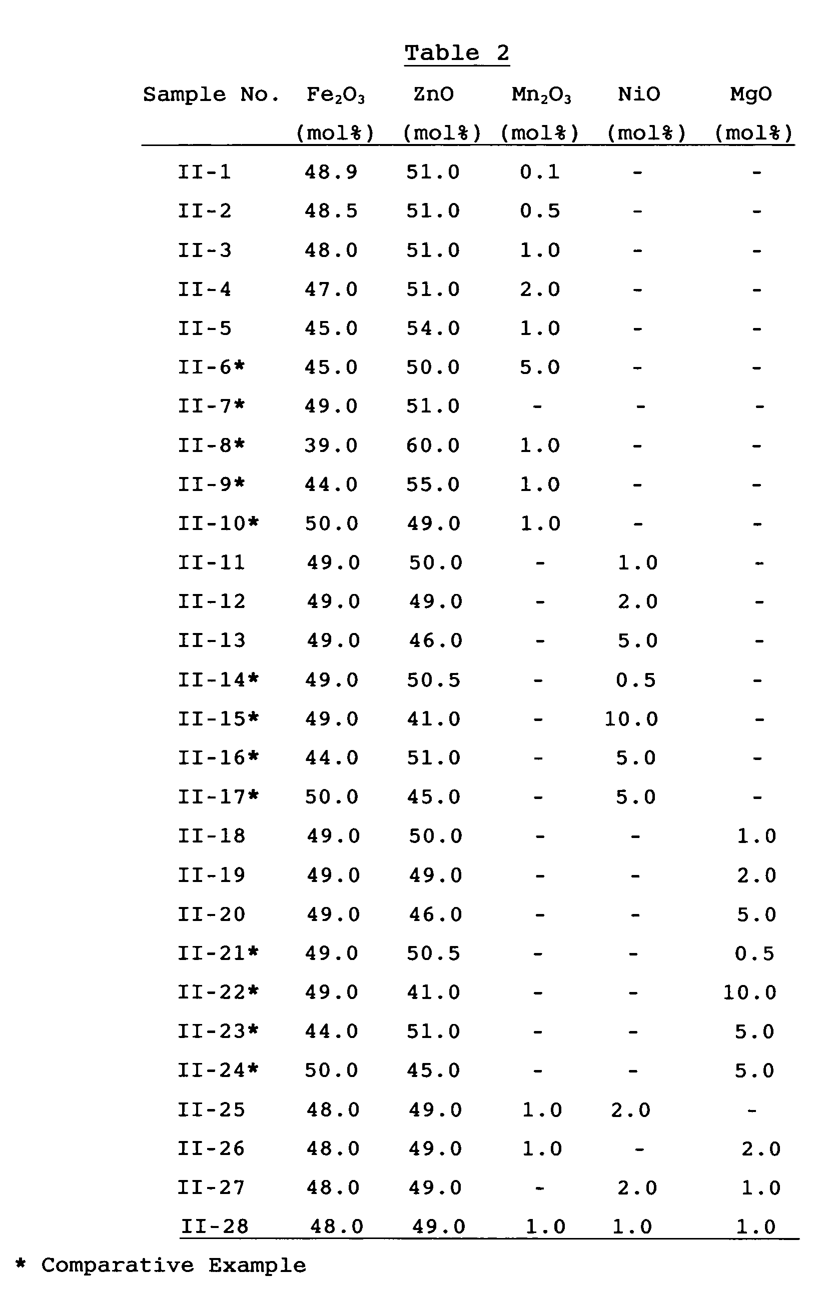

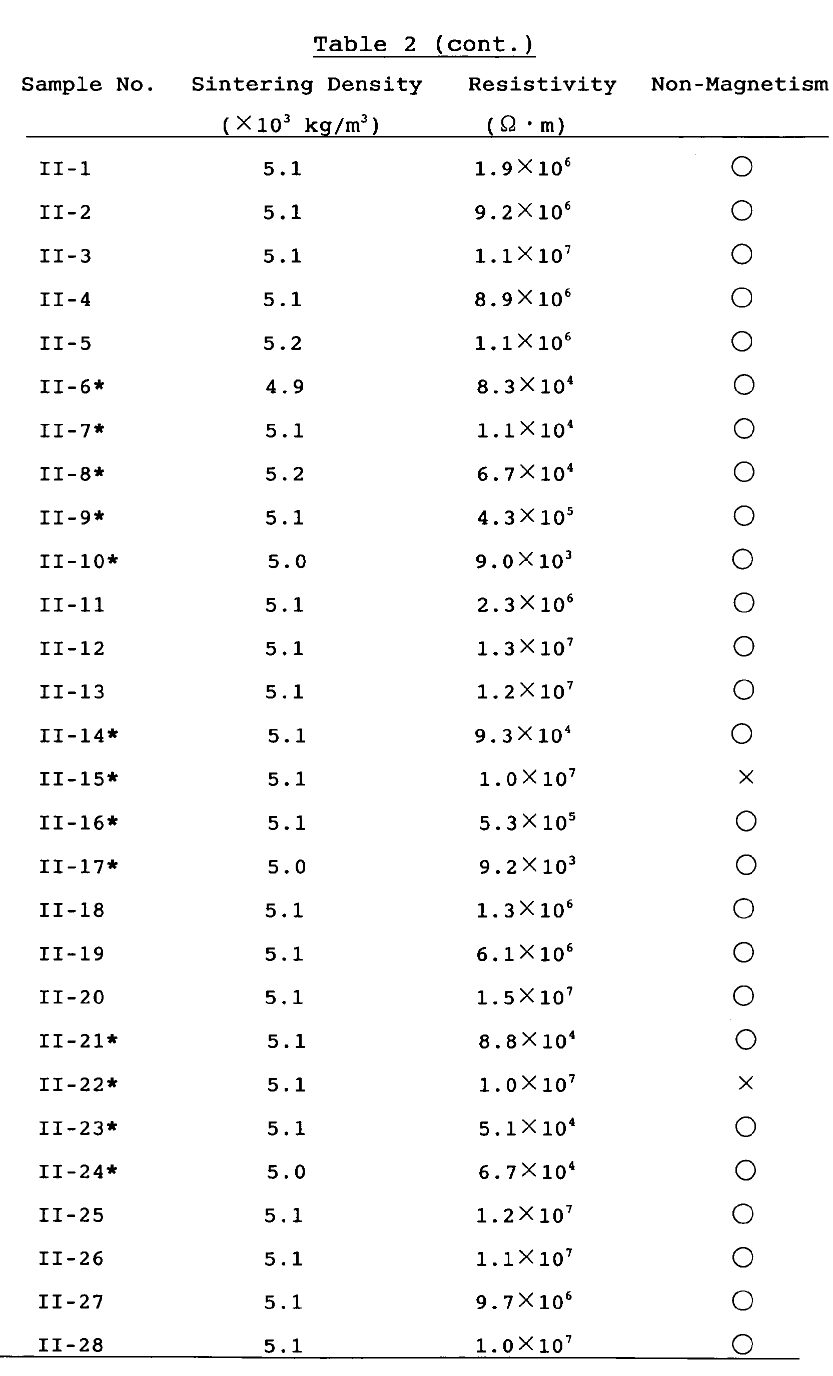

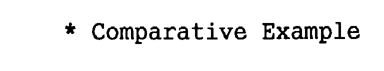

The effectiveness of the present invention could be seen from the results of Table 2.

That is, the nonmagnetic Zn-ferrite of the present invention comprises a nonmagnetic Zn-ferrite component containing iron oxide and zinc oxide as main ingredients and a given amount of at least one metal oxide selected from the group consisting of manganese oxide, nickel oxide and magnesium oxide, so it can have a high resistivity of 10⁶ Ω·m or greater without containing Cu.

## Claims

1. A nonmagnetic Zn-ferrite comprising iron oxide in an amount of 45 to 49.7 mol% as calculated on Fe₂0₃ basis with the balance being zinc oxide (as calculated on ZnO basis), **characterized by** having a Fe²⁺ content of up to 1 wt%.

2. The nonmagnetic Zn-ferrite according to claim 1, wherein the content of Fe²⁺ is 0.1 to 0.6 wt%.

3. The nonmagnetic Zn-ferrite according to claim 1, which has a P (phosphorus) content of up to 100 ppm by weight.

4. The nonmagnetic Zn-ferrite according to claim 1, which has a P (phosphorus) content of 5 to 50 ppm by weight.

5. A composite multilayer type electronic part in which a varistor device portion having a varistor layer and an internal electrode is joined, either directly or through an intermediate joining layer, to an inductor device portion having a ferrite layer and an internal conductor, **characterized in that**:
said ferrite layer is a nonmagnetic Zn-ferrite comprising iron oxide in an amount of 45 to 49.7 mol% as calculated on Fe₂O₃ basis with the balance being zinc oxide (as calculated on ZnO basis), wherein said nonmagnetic Zn-ferrite has a Fe²⁺ content of up to 1 wt%.

6. The composite multilayer type electronic part according to claim 5, wherein said nonmagnetic Zn-ferrite has a Fe²⁺ content of 0.1 to 0.6 wt%.

7. The composite multilayer type electronic part according to claim 5, wherein said nonmagnetic Zn-ferrite has a P (phosphorus) content of up to 100 ppm by weight.

8. The composite multilayer type electronic part according to claim 5, wherein said nonmagnetic Zn-ferrite has a P (phosphorus) content of 5 to 50 ppm by weight.

9. The composite multilayer type electronic part according to claim 5, wherein said varistor layer comprises ZnO as its main component.

10. The composite multilayer type electronic part according to claim 5, wherein said intermediate joining layer is formed by mixing a composition component that forms said ferrite layer with zinc oxide (ZnO) that forms said varistor layer at a given ratio.

11. A nonmagnetic Zn-ferrite, **characterized by** containing iron oxide in an amount of 45 to 49.7 mol% as calculated on Fe₂O₃ basis and manganese oxide in an amount of 0.05 to 4.0 mol% as calculated on Mn₂O₃ basis, with the balance being zinc oxide (as calculated on ZnO basis).

12. A nonmagnetic Zn-ferrite, **characterized by** containing iron oxide in an amount of 45 to 49.7 mol% as calculated on Fe₂O₃ basis and nickel oxide in an amount of 0.7 to 7.0 mol% as calculated on NiO basis, with the balance being zinc oxide (as calculated on ZnO basis).

13. A nonmagnetic Zn-ferrite, **characterized by** containing iron oxide in an amount of 45 to 49.7 mol% as calculated on Fe₂O₃ basis and magnesium oxide in an amount of 0.7 to 7.0 mol% as calculated on MgO basis, with the balance being zinc oxide (as calculated on ZnO basis).

14. The nonmagnetic Zn-ferrite according to claim 13, wherein a part of the content of said magnesium oxide is replaced by nickel oxide, and the total content of said nickel oxide (as calculated on NiO basis) and said magnesium oxide (as calculated on MgO basis) is 0.7 to 7.0 mol%.

15. The nonmagnetic Zn-ferrite according to any one of claims 12 to 14, wherein a part of the content of said iron oxide is replaced by manganese oxide, and the content of said manganese oxide (as calculated on Mn₂O₃ basis) is 0.05 to 4.0 mol%.

16. A composite multilayer type electronic part in which a varistor device portion having a varistor layer and an internal electrode is joined, either directly or through an intermediate joining layer, to an inductor device portion having a ferrite layer and an internal conductor, **characterized in that**:
said ferrite layer is a nonmagnetic Zn-ferrite containing iron oxide in an amount of 45 to 49.7 mol% as calculated on Fe₂O₃ basis and manganese oxide in an amount of 0.05 to 4.0 mol% as calculated on MgO basis, with the balance being zinc oxide (as calculated on ZnO basis).

17. A composite multilayer type electronic part in which a varistor device portion having a varistor layer and an internal electrode is joined, either directly or through an intermediate joining layer, to an inductor device portion having a ferrite layer and an internal conductor, **characterized in that**:
said ferrite layer is a nonmagnetic Zn-ferrite containing iron oxide in an amount of 45 to 49.7 mol% as calculated on Fe₂O₃ basis and nickel oxide in an amount of 0.7 to 7.0 mol% as calculated on NiO basis, with the balance being zinc oxide (as calculated on ZnO basis).

18. A composite multilayer type electronic part in which a varistor device portion having a varistor layer and an internal electrode is joined, either directly or through an intermediate joining layer, to an inductor device portion having a ferrite layer and an internal conductor, **characterized in that**:
said ferrite layer is a nonmagnetic Zn-ferrite containing iron oxide in an amount of 45 to 49.7 mol% as calculated on Fe₂O₃ basis and magnesium oxide in an amount of 0.7 to 7.0 mol% as calculated on MgO basis, with the balance being zinc oxide (as calculated on ZnO basis).

19. The composite multilayer type electronic part according to claim 18, wherein a part of the content of said magnesium oxide is replaced by nickel oxide, and the total content of said nickel oxide (as calculated on NiO basis) and said magnesium oxide (as calculated on MgO basis) is 0.7 to 7.0 mol%.

20. The composite multilayer type electronic part according to any one of claims 17 to 19, wherein a part of the content of said iron oxide is replaced by manganese oxide, and the content of said manganese oxide is 0.05 to 4.0 mol% as calculated on Mn₂O₃ basis.

21. The composite multilayer type electronic part according to any one of claims 16 to 18, wherein said varistor layer comprises ZnO as its main component.

22. The composite multilayer type electronic part according to claim 19, wherein said varistor layer comprises ZnO as its main component.

23. The composite multilayer type electronic part according to claim 20, wherein said varistor layer comprises ZnO as its main component.

24. The composite multilayer type electronic part according to any one of claims 16 to 18, wherein said intermediate joining layer is formed by mixing a composition component that forms said ferrite layer with zinc oxide (ZnO) that forms said varistor layer at a given ratio.

25. The composite multilayer type electronic part according to claim 19, wherein said intermediate joining layer is formed by mixing a composition component that forms said ferrite layer with zinc oxide (ZnO) that forms said varistor layer at a given ratio.

26. The composite multilayer type electronic part according to claim 20, wherein said intermediate joining layer is formed by mixing a composition component that forms said ferrite layer with zinc oxide (ZnO) that forms said varistor layer at a given ratio.
